# EUROPEAN PATENT SPECIFICATION

(11) **EP 1 462 498 B1**
(45) Date of publication and mention of the grant of the patent: **26.09.2007**
(21) Application number: 04006607.8
(22) Date of filing: 18.03.2004
(51) Int. Cl.: C09J 7/02, C08J 7/04

(54) **Bilayer plastic film and adhesive tape**
Zweischichtiger Kunststofffilm und Klebeband
Film plastique bicouche et ruban adhésif

(30) Priority: 26.03.2003 JP 2003084764
(43) Date of publication of application: 29.09.2004
(73) Proprietor: NITTO DENKO CORPORATION, Ibaraki-shi, Osaka 567-8680 (JP)
(72) Inventor: Ikishima, Shinsuke, Ibaraki-shi Osaka, 567-8680 (JP); Shibata, Kenichi, Ibaraki-shi Osaka, 567-8680 (JP); Ishiguro, Shigeki, Ibaraki-shi Osaka, 567-8680 (JP)
(74) Representative: Müller-Boré & Partner Patentanwälte

(56) References cited:
- WO-A-96/16802
- US-A- 5 777 022
- US-B1- 6 350 517
- DATABASE WPI Section Ch, Week 198139 Derwent Publications Ltd., London, GB; Class A14, AN 1981-70632D XP002282060 & JP 56 099667 A (MITSUBISHI RAYON CO LTD) 11 August 1981 (1981-08-11)

## Description

The invention relates to a plastic film that can be resistant to infiltration of solvents into substrate and have high resistance to solvents and also relates to an adhesive tape using such a plastic film.

PVC (polyvinyl chloride) films and PVC adhesive tapes using the PVC film as a substrate can be excellent in workability, heat resistance, flexibility, solvent resistance, and the like and thus are widely applied to a variety of constructions, automobiles, home-building materials, and the like. However, PVC produces dioxins when incompletely burnt at relatively low temperature, and thus many manufacturers tend to limit or abandon the use of PVC.

Thus, a variety of alternative plastic films to PVC films have been developed, but they are inferior to the PVC films in various surface characteristics including surface hardness, abrasion resistance and the like. Thus, the alternative films are of limited application, and there has been a strong demand for improvement in the surface characteristics of such films. A known example of the method for such improvement is a method of subjecting the surface to a hard coating treatment with an acrylic polymer, a silicone polymer, an epoxy polymer, or the like.

For example, there is a resin composition for providing a plastic surface with abrasion resistance and chemical resistance. Japanese Patent Application Laid-Open (JP-A) No. 09-48934 discloses such a resin composition, including (A) ultraviolet ray curable polyfunctional (meth)acrylate having two or more (meth)acryloyl groups in its molecule, (B) a high molecular weight monomer having terminal copolymerizable unsaturated double bonds, and /or (C) an acrylic polymer, and a photopolymerization initiator.

JP-A No. 2001-315263 discloses a hard coating sheet for providing a surface hardness and a weather resistance, which comprises an acrylic resin sheet containing 0.05 to 10% by weight of a UV absorber and a silicone hard coating film having a thickness of 2 to 7 µm laminated on one side surface of the sheet.

JP-A No. 2002-120330 discloses a white light-resistant laminated film having high resistance to light and weather, which comprises a white base material film and an ultraviolet ray absorbing layer and a low pollution layer both formed on at least one side of the base material film.

JP-A No. 2001-232730 discloses a hard coating film having high resistance to solvents and scratches and having high adherence, which comprises: a polymeric film substrate; a resin layer formed on at least one side of the film substrate, wherein the resin layer comprises a copolymer of at least three kinds of monomers including a (meth)acrylic monomer to which an ultraviolet ray absorbing compound is added, a (meth)acrylic monomer to which a light stable compound is added, and a polymerizable unsaturated compound having a functional group, and the resin layer is crosslinked by a crosslinkable compound, which reacts with the functional group; and a hard coating resin layer provided on the above resin layer.

The conventional hard-coat forming agent in the above-mentioned hard coating layer, however, cannot prevent a solvent from permeating and coming into contact with the substrate, and finally the substrate would swell. In the case of a conventional adhesive tape, the resin substrate can be swollen with the solvent and can peel off from the adherend when the solvent permeates and reaches the pressure-sensitive adhesive layer.

It is an object of the invention to solve the above problems and to provide a plastic film and an adhesive tape each having significantly improved resistance to solvents with no reduced abrasion or weather resistance.

In light of the current realities as mentioned above, the inventors have made active investigations and consequently found that a hard coating layer having a crosslinked structure comprising a (meth)acrylic (methacrylic or acrylic) polymer with a hydroxyl value of 20 to 80 (KOH mg/g) and a crosslinking agent can outstandingly improve the solvent resistance of the plastic film or the adhesive tape without reducing the abrasion or weather resistance.

Thus, the invention is directed to a plastic film, comprising: a substrate; and a hard coating layer formed on at least one side of the substrate, wherein the hard coating layer has a crosslinked structure comprising a (meth)acrylic polymer with a hydroxyl value of 20 to 80 (KOH mg/g) and a crosslinking agent.

In the invention, the (meth)acrylic polymer preferably has a hydroxyl value of 30 to 70 (KOH mg/g), more preferably of 40 to 60 (KOH mg/g). The (meth)acrylic polymer with a hydroxyl value of 20 to 80 (KOH mg/g) can form a hard coating layer having a high crosslinking density so that infiltration of solvents into the substrate can effectively be prevented. If the hydroxyl value is less than 20, the resulting solvent resistance effect is not sufficient. If the hydroxyl value is more than 80, good resistance to solvents can be obtained, but flexibility can be poor.

In the invention, the substrate is preferably a layer comprising a polyolefin resin.

In the invention, the (meth)acrylic polymer is preferably a HALS-hybrid (meth)acrylic polymer, which can form a hard coating layer having a long life resistance to weather.

In addition, the substrate preferably shows a swelling rate of 5% or less, more preferably of 1% or less, most preferably of 0%, after the surface of the hard coating layer of the plastic film is kept in contact with toluene for 5 minutes. If the substrate shows a swelling rate of more than 5%, the hard coating layer can be insufficient in solvent resistance, so that the hard coating layer can tend to peel off from the substrate or so that a solvent which swells the substrate can tend to permeate from the substrate to the pressure-sensitive adhesive layer and can tend to allow the adhesive sheet to have a reduced adherence and to peel off from the adherend.

The invention is also directed to an adhesive tape, comprising: the above plastic film; and a layer of a pressure-sensitive adhesive applied to the substrate or the hard coating layer of the plastic film.

The invention is described in detail with reference to the preferred embodiments below.

The plastic film of the invention comprises the substrate and the hard coating layer provided on at least one side of the substrate, wherein the hard coating layer comprises a crosslinked structure of the (meth)acrylic polymer having a hydroxyl value (a varnish value) of 20 to 80 (KOH mg/g).

Examples of the substrate include, but are not limited to, a film produced by melt extrusion and biaxial orientation of a thermoplastic resin, and so on.

Examples of such a thermoplastic resin include, but are not limited to, a polyolefin resin such as isotactic polypropylene, atactic polypropylene, syndiotactic polypropylene, polyethylene of from low to high density, and TPO, a polyester resin, a polyamide resin, a polycarbonate resin, and a (meth)acrylic resin. The polyolefin resin has good workability and flexibility, and thus is preferably used as the material for the substrate.

The substrate may contain a UV absorber or a heat-resisting stabilizer, such as benzotriazole compounds, benzophenone compounds, benzoate compounds, and cyanoacrylate compounds.

The substrate may have any appropriate thickness depending on its use but generally has a thickness of 60 to 200 µm, preferably of 75 to 150 µm in terms of weather resistance, light resistance and mechanical characteristics.

According to the invention, the hard coating layer is formed on at least one side of the substrate. The surface of the substrate may be subjected to any type of electric discharge treatment, an anchor coating treatment or any other treatment so as to have improved adhesion ability to the hard coating layer.

Any (meth)acrylic polymer with a hydroxyl value of 20 to 80 (KOH mg/g) may be used without limitation as a material for the hard coating layer.

For example, such a polymer is a copolymer of alkyl (meth)acrylate (methacrylate or acrylate) (with an alkyl group such as methyl, ethyl, n-propyl, isopropyl, n-butyl, 2-ethylhexyl, lauryl, stearyl, and cyclohexyl) and a monomer having a hydroxyl group (a crosslinkable functional group).

Examples of such a monomer having the hydroxyl group include β-hydroxy(meth)acrylate, methylolated (meth)acrylamide, 2-hydroxyethyl (meth)acrylate, 2-hydroxypropyl (meth)acrylate, 2-hydroxy vinyl ether, and polyethylene glycol mono(meth)acrylate. One of these monomers may be used alone, or two or more thereof may be used in combination.

Based on 100 parts by weight of the alkyl (meth)acrylate, 1 to 80 parts by weight of the monomer having the hydroxyl group may be used to adjust the hydroxyl value to the target.

Any other monomer with any other crosslinkable functional group may also be used in combination. Examples of such any other crosslinkable functional group include carboxyl, acid anhydride, amino, and epoxy. Examples of such a monomer include (meth)acrylic acid, itaconic acid, maleic acid, crotonic acid, vinylsulfonic acid, (meth)acrylamide, diethylaminoethyl vinyl ether, 2-aminoethyl vinyl ether, and glycidyl (meth)acrylate. One of these monomers may be used alone, or two or more thereof may be used in combination.

The (meth)acrylic polymer can be produced by any known method, for example, including a method of radical copolymerization of the monomers.

Examples of the polymerization initiator include peroxides such as hydrogen peroxide, benzoyl peroxide and tert-butyl peroxide. The polymerization initiator is preferably used by itself but may be used in combination with a reducing agent to form a redox-type polymerization initiator. Examples of such a reducing agent include sulfites, hydrogensulfites, an ionization salt such as an iron, copper or cobalt salt, amines such as triethanolamine, and reducing sugars such as aldoses and ketoses. An azo compound is also preferably used as the polymerization initiator, and available examples of such an azo compound include 2,2'-azobis-2-methylpropioamidinate, 2,2'-azobis-2,4-dimethylvaleronitrile, 2,2'-azobis-N,N'-dimethyleneisobutylamidinate, 2,2'-azobisisobutyronitrile, and 2,2'-azobis-2-methyl-N-(2-hydroxyethyl)propionamide. Two or more types of the above polymerization initiators may be used in combination.

The polymerization initiator may be used in an amount of 0.001 to 5 parts by weight based on 100 parts by weight of the monomers.

The polymerization temperature may be from about 30°C to about 100°C when a single polymerization initiator is used, and from about 5°C to about 60°C when a redox-type polymerization initiator is used. The polymerization may not be kept at a constant temperature. As the polymerization progresses, the temperature can be raised by heat of polymerization. Thus, cooling may be performed as needed. The polymerization vessel may contain any appropriate atmosphere during the polymerization, but is preferably filled with an inert gas such as nitrogen gas by replacement, so that the polymerization can proceed faster.

In the invention, the (meth)acrylic polymer is preferably a HALS-hybrid (meth)acrylic polymer, in which a hindered amine light stabilizer (HALS) having a functional group at its end is copolymerized.

Any known HALS may be used without limitation. Examples of such a HALS include a reaction type such as Adekastab LA-82 and LA-87 each manufactured by Asahi Denka Kogyo K.K., a monomer type such as Hostavin N-20 manufactured by Hoechst Japan Ltd. and Tomisorb 77 manufactured by Yoshitomi Fine Chemical, Ltd., and an oligomer type such as Uvinal 5050H manufactured by BASF Japan Ltd.

The content of HALS in the (meth)acrylic polymer is preferably from about 0.1% to about 50% by weight, more preferably from about 1% to about 20% by weight.

The plastic film of the invention may be produced by a process including the steps of applying, to at least one side of a substrate, a polymer solution that contains the (meth)acrylic polymer, a crosslinking agent and so on and thermally curing the polymer to form, on the substrate, a hard coating layer having a three-dimensionally crosslinked structure.

Examples of the solvent include an aromatic hydrocarbon solvent such as toluene and xylene, an aliphatic carboxylate ester such as ethyl acetate, and an aliphatic hydrocarbon solvent such as hexane, heptane and octane. One of these solvents may be used alone, or two or more thereof may be used in combination.

The content of the solvent in the polymer solution is from about 20% to about 90% by weight.

Examples of the crosslinking agent include an epoxy-type crosslinking agent, an isocyanate-type crosslinking agent and an aziridine-type crosslinking agent.

The crosslinking agent may be added in an amount of 10 to 30 parts by weight based on 100 parts by weight of the (meth)acrylic polymer.

The polymer solution may also contain an additive such as a pigment, a dye, a flame retarder, a thermal stabilizer, a plasticizer, and a tackifier, as needed.

Any conventional method of application may be used without limitation. For example, the polymer solution may be applied to the substrate using any appropriate coater such as a bar coater, a spin coater, a roll coater, and an applicator.

The thickness of the hard coating layer is preferably from 1 to 10 pm, more preferably from 1.5 to 8 pm, particularly preferably from 2 to 5 pm, in terms of sufficiently developing solvent resistance and retaining flexibility. If the thickness is less than 1 pm, the solvent resistance can tend to be poor. If the thickness is more than 10 µm, the flexibility can tend to be poor.

The adhesive tape of the invention may be produced by a process including the step of applying a pressure-sensitive adhesive to the substrate of the plastic film (or to one hard coating layer if the hard coating layers are formed on both sides of the substrate) to form a pressure-sensitive adhesive layer.

Any conventional method of application may be used without limitation. For example, the pressure-sensitive adhesive layer may be formed by a process including the steps of using the coater as described above to apply a pressure-sensitive adhesive solution to the substrate of the plastic film and then removing the solvent to form the pressure-sensitive adhesive layer. The pressure-sensitive adhesive layer may also be formed by a process including the steps of adding a crosslinking agent to a pressure-sensitive adhesive solution, and crosslinking and curing the adhesive polymer by heat to form the pressure-sensitive adhesive layer.

Any known pressure-sensitive adhesive may be used without limitation. Examples of such a pressure-sensitive adhesive include a variety of adhesives such as pressure-sensitive rubber-based adhesives, pressure-sensitive (meth)acrylic adhesives and pressure-sensitive silicone-based adhesives.

Any known solvent and crosslinking agent may be used without limitation. Examples thereof include those as shown above.

The pressure-sensitive adhesive layer may have any thickness but usually has a thickness of about 1 to about 300 µm.

The plastic film or the adhesive tape according to the invention has the hard coating layer as described above and thus can have not only a good resistance to weather but also an excellent resistance to solvents such as a variety of organic solvents including toluene and ethyl acetate, an engine oil and a gasoline. Thus, infiltration of solvents into the substrate or swelling of the substrate can be effectively prevented, and the adhesive tape can be effectively prevented from peeling off from the adherend.

The constitution and effect of the invention are specifically described in the examples below. The evaluation data as shown below were obtained by the measurement methods below. Measurement of Hydroxyl Value
The hydroxyl value was determined as shown below. One gram of the (meth)acrylic polymer is precisely weighed and dissolved in 5 ml of an acetylation reagent (acetic anhydride/pyridine). The solution is heated at a temperature of 95 to 100°C for one hour so that acetylation is allowed to occur. One ml of pure water is added in order to hydrolyze the acetic anhydride, and 10 ml of ethanol is added. In an automatic titration apparatus, the resulting solution is titrated with an aqueous 0.1 mol/L KOH solution for measurement of the hydroxyl value (according to JIS K 0070).

### Measurement of Swelling Rate

A screw tube vessel was filled with toluene in a meniscus contact state, and only the surface of the hard coating layer of the prepared plastic film was kept in contact with the solvent. The thickness of the substrate was measured before and 5 minutes after the contact with the solvent using a 1/1000 mm dial gauge, and the following formula was used to calculate the swelling rate (a rate of change in thickness) of the substrate:
Swelling rate (%) =[(thickness (pm) of substrate after contact-thickness (µm) of substrate before contact)/ thickness (µm) of substrate before contact] x 100

### Evaluation of Solvent Resistance

The surface of the hard coating layer of the prepared plastic film was kept in contact with toluene. After kept for 5 minutes, the surface of the hard coating layer was evaluated for change in shape using the following criteria:
o: No change occurred in the surface of the hard coating layer.
x: Small cracks and swelling occurred in the surface of the hard coating layer.

### Evaluation of Weather Resistance

In a metal halide lamp type accelerated weather tester (Daipla metal weather tester manufactured by Daipla Wintes Co.,Ltd.), the surface of the hard coating layer of the prepared plastic film was irradiated with light for 500 hours under the conditions of a light radiation degree of 90 mW/cm² and B.P.T. = 63°C. The plastic film was then evaluated for chalking and whitening using the following criteria:
5: Neither chalking nor whitening was observed in the hard coating layer.
4: Whitening was observed in part of the hard coating layer, but no degradation was observed in the substrate.
3: Whitening was observed in at least half of the hard coating layer region, but no degradation was observed in the substrate.
2: The hard coating layer dropped off, and chalking was observed in the substrate.
1: The hard coating layer dropped off, and degradation, hardening and cracking were observed in the whole of the substrate.

### Example 1

### Preparation of Plastic Film

Into an extruder were introduced 80 parts by weight of LLDPE (FV201 manufactured by Sumitomo Chemical Co. Ltd.) and 20 parts by weight of a reactor TPO resin (KS353P manufactured by SunAllomer Ltd.) and melted and extruded through a T die to form a substrate (100 pm in thickness).

Mixed were 100 parts by weight of a HALS-hybrid acrylic polymer (HALS-Hybrid UV-G300 with a hydroxyl value (a varnish value) of 39±8 manufactured by Nippon Shokubai Co., Ltd.), 13 parts by weight of a crosslinking agent (Sumidur N-3200 manufactured by Sumitomo Bayer Urethane Co., Ltd.) and 10 parts by weight of ethyl acetate to obtain a polymer solution. The polymer solution was applied to one side of the substrate with a bar coater in such a manner that a hard coating layer would be formed with a thickness of 2 µm after drying. The solution was then dried by heat at 120°C for 2 minutes and subjected to accelerated curing and aging at 60°C for 2 days to form a hard coating layer. Thus, a plastic film was prepared.

### Preparation of Adhesive Tape

In a toluene solvent, 95 parts by weight of butyl acrylate, 5 parts by weight of acrylic acid and 0.2 parts by weight of benzoyl peroxide underwent polymerization to obtain a solution of an acrylic copolymer (with a weight average molecular weight of about 500,000). Five parts by weight of an isocyanate-type crosslinking agent (Coronate L manufactured by Nippon Polyurethane Industry Co., Ltd.) was added to the acrylic copolymer solution to form a pressure-sensitive acrylic adhesive (with a solids content of 20%). The pressure-sensitive acrylic adhesive was applied to the surface of the plastic film (wherein the surface was opposite to the hard coating layer) so as to have a thickness of 30 µm after drying and then dried at 100°C for 2 minutes to form a pressure-sensitive adhesive layer. Thus, an adhesive tape was prepared.

### Example 2

### Preparation of Plastic Film and Adhesive Tape

A plastic film and an adhesive tape were prepared using the process of Example 1, except that 100 parts by weight of another HALS-hybrid acrylic polymer (HALS-Hybrid UV-G301 with a hydroxyl value (a varnish value) of 39±8 manufactured by Nippon Shokubai Co., Ltd.) was used alternatively.

### Comparative Example 1

### Preparation of Plastic Film and Adhesive Tape

A plastic film and an adhesive tape were prepared using the process of Example 1, except that 100 parts by weight of another HALS-hybrid acrylic polymer (HALS-Hybrid UV-G3 with a hydroxyl value (a varnish value) of 9±2 manufactured by Nippon Shokubai Co., Ltd.) and 2.8 parts by weight of the crosslinking agent (Sumidur N-3200 manufactured by Sumitomo Bayer Urethane Co., Ltd.) were used alternatively.

### Comparative Example 2

### Preparation of Plastic Film and Adhesive Tape

A plastic film and an adhesive tape were prepared using the process of Example 1, except that 100 parts by weight of another HALS-hybrid acrylic polymer (HALS-Hybrid UV-G12 with a hydroxyl value (a varnish value) of 9±2 manufactured by Nippon Shokubai Co., Ltd.) and 2.8 parts by weight of the crosslinking agent (Sumidur N-3200 manufactured by Sumitomo Bayer Urethane Co., Ltd.) were used alternatively.

### Comparative Example 3

### Preparation of Plastic Film and Adhesive Tape

A plastic film and an adhesive tape were prepared using the process of Example 1, except that 100 parts by weight of another HALS-hybrid acrylic polymer (HALS-Hybrid UV-G13 with a hydroxyl value (a varnish value) of 8±2 manufactured by Nippon Shokubai Co., Ltd.) and 2.8 parts by weight of the crosslinking agent (Sumidur N-3200 manufactured by Sumitomo Bayer Urethane Co., Ltd.) were used alternatively.

**Table 1**

| | Toluene-Swelling Rate (%) | Solvent Resistance | Weather Resistance |
|---|---|---|---|
| Example 1 | 0 | ○ | 5 |
| Example 2 | 0 | ○ | 5 |
| Comparative Example 1 | 8 | × | 5 |
| Comparative Example 2 | 7 | × | 5 |
| Comparative Example 3 | 6 | × | 5 |

It is apparent from Table 1 that the hard coating layer formed of the crosslinked structure comprising the (meth)acrylic polymer with a hydroxyl value of 20 to 80 (KOH mg/g) and the crosslinking agent can completely block infiltration of a solvent such as toluene into the substrate and can also prevent swelling of the substrate. It is also apparent that the HALS-hybrid (meth)acrylic polymer can form a hard coating layer with good weather resistance.

## Claims

1. A plastic film, comprising: a substrate; and a hard coating layer formed on at least one side of the substrate, wherein the hard coating layer has a crosslinked structure comprising a methacrylic or acrylic polymer with a hydroxyl value of 20 to 80 (KOH mg/g) and a crosslinking agent.

2. The plastic film according to Claim 1, wherein the substrate is a layer comprising a polyolefin resin.

3. The plastic film according to Claim 1 or 2, wherein the methacrylic or acrylic polymer is a HALS-hybrid methacrylic or acrylic polymer.

4. The plastic film according to any one of Claims 1 to 3, wherein the substrate shows a swelling rate of at most 5% after the surface of the hard coating layer of the plastic film is kept in contact with toluene for 5 minutes.

5. An adhesive tape, comprising: the plastic film according to any one of Claims 1 to 4; and a layer of a pressure-sensitive adhesive applied to the substrate or the hard coating layer of the plastic film.

## Patentansprüche

1. Kunststofffolie, umfassend ein Substrat und eine Hartbeschichtungsschicht, die auf mindestens einer Seite des Substrats gebildet ist, wobei die Hartbeschichtungsschicht eine vernetzte Struktur aufweist, umfassend ein Methacryl- oder Acrylsäurepolymer mit einer Hydroxylzahl von 20 bis 80 (KOH mg/g) und ein Vernetzungsmittel.

2. Kunststofffolie nach Anspruch 1, wobei das Substrat eine Schicht ist, die ein Polyolefinharz umfasst.

3. Kunststofffolie nach Anspruch 1 oder 2, wobei das Methacryl- oder Acrylsäurepolymer ein HALS-Hybrid-Methacryl- oder Acrylsäurepolymer ist.

4. Kunststofffolie nach einem der Ansprüche 1 bis 3, wobei das Substrat eine Quellrate von höchstens 5% zeigt, nachdem die Oberfläche der Hartbeschichtungsschicht der Kunststofffolie für 5 Minuten mit Toluol in Kontakt gehalten worden ist.

5. Klebeband, umfassend den Kunststofffolie nach einem der Ansprüche 1 bis 4 und eine Schicht eines druckempfindlichen Klebers, der auf das Substrat oder die Hartbeschichtungsschicht der Kunststofffolie aufgebracht ist.

## Revendications

1. Film en plastique, qui comprend : un substrat ; et une couche de revêtement dure formée sur au moins un côté du substrat, dans lequel la couche de revêtement dure a une structure réticulée comprenant un polymère méthacrylique ou acrylique avec un indice d'hydroxyle de 20 à 80 (KOH mg/g) et un agent de réticulation.

2. Film en plastique selon la revendication 1, dans lequel le substrat est une couche comprenant une résine polyoléfinique.

3. Film en plastique selon la revendication 1 ou 2, dans lequel le polymère méthacrylique ou acrylique est un polymère méthacrylique ou acrylique contenant un hybride d'HALS (photostabilisant à base d'amine encombrée).

4. Film en plastique selon l'une quelconque des revendications 1 à 3, dans lequel le substrat présente un taux de gonflement d'au plus 5 % après que la surface de la couche de revêtement dure du film en plastique a été maintenue en contact avec du toluène pendant 5 minutes.

5. Ruban adhésif, qui comprend : le film en plastique selon l'une quelconque des revendications 1 à 4 ; et une couche d'un adhésif autocollant appliquée au substrat ou à la couche de revêtement dure du film en plastique.
